# EUROPEAN PATENT SPECIFICATION

(11) **EP 4 351 875 B1**
(45) Date of publication and mention of the grant of the patent: **02.04.2025**
(21) Application number: 21737892.6
(22) Date of filing: 11.06.2021
(51) Int. Cl.: B32B 15/08, C08L 23/08, C09J 123/08, C08L 33/10, C08K 3/34, C09D 123/08

(54) **PEELABLE AND SEALABLE LIDSTOCK MATERIAL FOR CONTAINERS**
ABZIEHBARES UND SIEGELBARES DECKELMATERIAL FÜR BEHÄLTER
MATÉRIAU D'OPERCULAGE PEELABLE ET SCELLABLE POUR RÉCIPIENTS

(43) Date of publication of application: 17.04.2024
(73) Proprietor: Amcor Flexibles North America, Inc., Neenah, WI 54956 (US)
(72) Inventor: LANDECK, Sebastian, Neenah, WI 54957 (US)
(74) Representative: Vossius & Partner Patentanwälte Rechtsanwälte mbB
(86) International application number: PCT/US2021/037014
(87) International publication number: WO 2022/260679

(56) References cited:
- US-A- 5 626 929
- US-A- 5 958 531

## Description

### FIELD OF THE INVENTION

The present invention is related to peelable and sealable lidstock material for containers and containers sealed with the peelable and sealable lidstock.

### BACKGROUND

Containers having metal sealing surfaces and flexible peel off lids are used for foods such as instant coffee, baby formulas and soup mixes. The containers have metal bodies or a metal ring around an open-end portion of the container, and the lidstock is heat sealed directly to the metal surface or a coating thereon. The lidstock can be peeled away from the container, allowing easy access to the contents.

Lidstock sealed to the container sealing surface typically has at least a metal foil layer and a sealing layer. The sealing layer may be a composite film (extruded polymer) or the sealing layer may be a heat seal lacquer. Composite film sealing layers typically have a more robust performance, such as a wider sealing window and more consistent peel force value.

US 5,958,531 discloses peelable and heat sealable lidstock material for steel end containers. The lidstock material includes a film comprising (a) 35 to70 percent by weight of an ethylene-carboxylic acid copolymer, (b) 10 to 40 % by weight of polybutylene, and (c) at least 18 % by weight of a particulate inorganic filler.

US 5,626,929 discloses a peelable and heat sealable lidstock material comprising a metal or polymer substrate laminated with a single layer film comprising (a) 30 to 70 % by weight of a butene-1 and ethylene copolymer wherein ethylene comprises 1-15 mole percent of the copolymer, (b) 10 to 40 % by weight of an ethylene homopolymer or an ethylene-vinyl acetate copolymer or an ethylene-methyl acrylate copolymer, and (c) at least 18 % by weight of a particulate inorganic filler.

US 2005276940 discloses a peelable and heat sealable material suitable for bonding to a wide variety of substrates, comprising a solid substrate joined to a film, the film comprising (a) aliphatic-aromatic copolyester, (b) particulate inorganic filler, (c) butene-1 polymer, and (d) ethylene-vinyl acetate copolymer, wherein said film comprises about 20 to 30 % by weight of the inorganic filler.

US 2004180160 discloses a lidstock material comprising a solid substrate laminated with a film comprising. (a) 15 to 25 % by weight of a butene-1 polymer, (b) 35 to 55 % by weight high density polyethylene, (c) 5 to15 % by weight polypropylene, and (d) at least 18 % by weight of a particulate inorganic filler.

US 4,414,053 discloses polymer blends and easy-peel films, for the preparation of heat sealed packages fabricated from polymer films, the polymer composition of the easy peel films consisting essentially of (a) 100 parts by weight of an ethylene copolymer having polymerized therein about 70-98 % by weight of ethylene and the balance an alkyl ester of acrylic or methacrylic acid, and (b) 1 to 5 parts by weight of a polymer of a higher alkyl ester of acrylic or methacrylic acid, being a homopolymer of said ester or a copolymer of said ester with ethylene in which the copolymer contains at least 25 weight % of said ester; the alkyl group of said ester containing about 8 to about 24 carbon atoms.

Without contesting the associated advantages of the state-of-the-art systems, there is still a need to provide containers with peelable and sealable lidstock having an improved combination of properties in terms of peel force, burst strength and footprint of remaining seal layer on the edge of the metal container after peeling.

### SUMMARY

The present invention aims to provide a sealing layer on a peelable and sealable lidstock that does not present the drawbacks of the prior art.

It is the aim of the present invention to provide a peelable sealing layer for sealing a lidstock to a container, said seal layer providing a combination of (a) approximately constant peel force over a wide range of heat seal temperatures; (b) even and consistent cohesive failure in the seal layer upon peeling; (c) high burst strength of the sealed lid and (d) a distinct uniform mark (footprint) on the sealing surface of the container after peeling of the lidstock.

The present invention discloses a peelable and sealable lidstock including a metal substrate and a sealing layer, the sealing layer including a) from 70 to 89 % by weight, of a copolymer (A) including one or more polymerized olefin monomers and one or more polymerized ethylenically unsaturated (poly)carboxylic acid monomers, b) from 10 to 29 % by weight of a copolymer (B) comprising one or more polymerized (meth)acrylate ester monomers, and c) from 1 to 10 % by weight of one or more inorganic particles (C) characterized by a mass median diameter (D₅₀) comprised between 1 and 5 micron.

Some embodiments of the peelable and sealable lidstock include inorganic particles (C) which are characterized by a particle size distribution comprising a D₉₈ of less than 10 micron and a D10 of less than 1 micron.

Copolymer (A) may include from 55 to 90 % by weight of one or more polymerized olefin monomers, and from 10 to 35 % by weight of one or more polymerized ethylenically unsaturated (poly)carboxylic acid monomers selected from the group consisting of (meth)acrylic acid, maleic acid, fumaric acid, crotonic acid and itaconic acid, and copolymer (B) may include one or more polymerized (meth)acrylate C1-C8 ester monomers. Copolymer (A) may have from 70 to 85 % by weight of polymerized ethylene, and from 15 to 30 % by weight of (meth)acrylic acid.

Copolymer (B) may include up to 30 % by weight of one or more polymerized ethylenically unsaturated (poly)carboxylic acid monomers selected from the group consisting of (meth)acrylic acid, maleic acid, fumaric acid, crotonic acid and itaconic acid. Copolymer (B) may include a polymerized mixture of methyl methacrylate and butyl (meth)acrylate. Copolymer (B) may include a polymerized mixture of methyl methacrylate, butyl (meth)acrylate and methacrylic acid

The inorganic particles (C) may be selected from the group consisting of halloysite, kaolinite, illite, montmorillonite, vermiculite, talc, sepiolite, palygorskite, pyrophyllite and mixtures thereof. The inorganic particles (C) may have a particle size distribution comprising a D₉₈ of 8 microns or less. The inorganic particles (C) may have a particle size distribution comprising a D₉₈ of 6 microns or less. The sealing layer may include between 1 and 5 % by weight of inorganic particles (C).

The metal substrate of the peelable and sealable lidstock may be an aluminum foil with a thickness between 20 and 200 microns. The thickness of the sealing layer may be between 2 and 13 microns. The thickness of the sealing layer may be between 4 and 10 microns. The thickness of the sealing layer may be between 6 and 9 microns.

Also disclosed herein is a method for producing the peelable and sealable lidstock. The method includes the steps of a) unwinding a coil of the metal substrate, b) applying a water-based lacquer comprising copolymer (A), copolymer (B) and inorganic particles (C) on the unwound metal substrate by means of a coating system, and c) drying the water-based lacquer to form the sealing layer. These steps result in the peelable and sealable lidstock including the metal substrate and the sealing layer, the thickness of the sealing layer being between 2 and 13 microns. The water-based lacquer may have a solids content between 35 and 55 % by weight.

Also disclosed herein is a sealed container comprising a peel off lid sealed to a container sealing surface, said lid comprising the peelable and sealable lidstock. The container sealing surface is a rigid ring. The average peel force between the peel off lid and the container sealing surface ranges between 8 and 15 N according to ASTM F2824-10 (45° peel angle). The burst strength of the sealed container is at least 2 bar according to ASTM F1140/F1140M-13, Test Method A. The container sealing surface presents an uninterrupted, sharply defined footprint of sealing layer remaining after peeling away the peel off lid. An initial maximum peel force between the peel off lid and the container sealing surface may be between 15 and 40 N according to ASTM F2824-10 (45° peel angle). The container sealing surface may be selected from the group consisting of bare tinplate, tin-free steel and aluminum. The container sealing surface may be coated or otherwise treated.

The inventions disclosed herein may include other features as outlined below.

### BRIEF DESCRIPTION OF THE DRAWINGS

Figure 1A is a perspective view of an embodiment of a sealed container comprising a peel off lid;
Figure 1B is a perspective view of an embodiment of a sealed container comprising a peel off lid, with the lid partially peeled away from the sealing surface of the container;
Figure 2 is a top view of an embodiment of a container, shown without a peel off lid;
Figure 3 is a top view of an embodiment of a container comprising an embodiment of a peel off lid;
Figure 4 is a cross-sectional view of an embodiment of a peelable and sealable lidstock;
Figure 5 is a top view of an embodiment of a container after the peel off lid has been removed;
Figures 6A through 6E are exemplary drawings of the appearance of the footprint obtained after a peel off lid is removed from a container sealing surface; and
Figure 7 is an exemplary chart of peel force obtained by ASTM F2824-10 (45° peel angle).

### DETAILED DESCRIPTION

The present invention provides a peelable and sealable lidstock for containers. The containers may have a sealing surface including a metal material. The lidstock refers to a metal substrate coated with a sealing layer. The lidstock may take the form of a material web (i.e. a sheet or a film) or the web may be cut into a desired shape, such as a circular disc or a rectangle (i.e. a die cut lid). In some cases, the lidstock is a die cut lid. The die cut lid may be embossed. The coated sealing layer comprises a blend of materials that enable a previously unachievable performance balance in the areas of peel force, burst strength and footprint appearance.

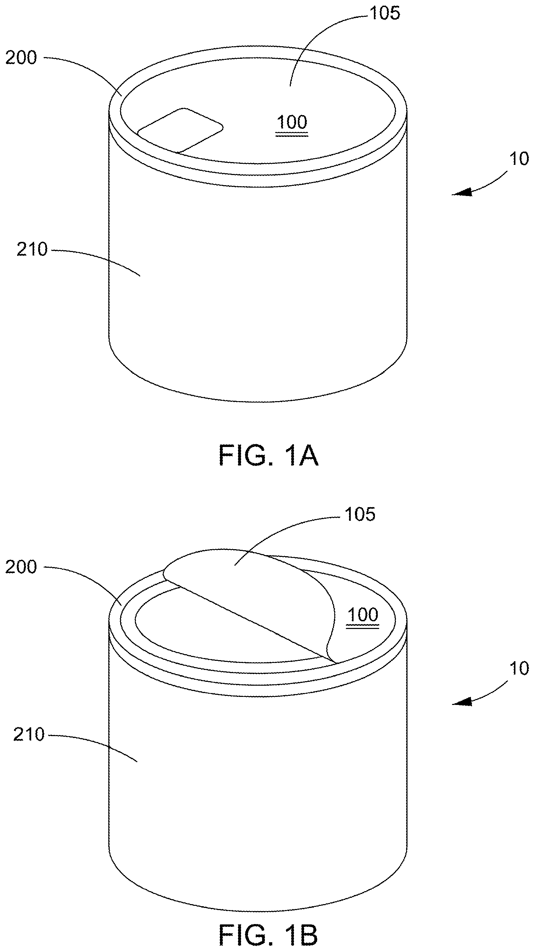

Figures 1A and 1B depict a specific embodiment of a sealed container 10 that includes a peel off lid 105 made from a peelable and sealable lidstock 100. The peel off lid 105 is sealed to a container sealing surface 200. As depicted in this diagram, the container sealing surface 200 is part of a rigid, cylindrical container body 210. The container body 210 may be wholly or partially comprised of metal.

According to some embodiments disclosed herein, at least the sealing surface of the container body (i.e. the container sealing surface 200) to which the peel off lid 105 is sealed comprises metal. The container sealing surface may be in the form of a rigid ring constructed from metal.

According to some embodiments disclosed herein, the sealing surface of the container body to which the peel off lid is sealed comprises a polymeric material, e.g. a coating.

In some embodiments of the sealed container, the sealing surface of the container body comprises bare tinplate, tin-free steel or aluminum. The peel off lid is sealed directly to the metal material of the container sealing surface. The peel off lid may be heat sealed directly to the metal material of the container sealing surface.

In some embodiments of the sealed container, the sealing surface of the container comprises a metal that has a coating on the surface that has been applied by lacquer coating, extrusion coating, lamination, or any other means. In some cases, the coating on the container sealing surface may be similar or identical to the sealing layer of the peel off lid, as will be discussed later. The sealing layer of the peel off lid is sealed to the coating on the metal material. The sealing layer of the peel off lid may be heat sealed to the coating on the metal material.

As shown in Figures 1A and 1B, the container body 210 includes a bottom wall and a side wall extending upwardly from the bottom wall. The container body 210 may be constructed from metal, polymer, glass or fiber-based materials or a combination of these materials. The top portion of the sealed container 10 is the peel off lid 105, according to the present invention.

The sealed container may be produced by heat sealing the peel off lid 105 to the container sealing surface 200 in a separate process. The finished end or "peel off end" (peel off lid 105 heat sealed to the container sealing surface 200) is then fixed to the side wall of the container body 210. The side wall may be a metal, a polymer, a glass jar or spiral wound paperboard.

In a different embodiment of a sealed container, the lidstock may be sealed directly to the upper edge portion or upper lip or sealing flange of the side wall constructed of metal. The container body 210 and the container sealing surface 200 may be constructed from one piece of metal selected from the group consisting of tinplate, tin-free steel, and aluminum.

As shown in Figure 1B, in use, the sealed container 10 can be opened to access the contents. The peel off lid 105 can be manually peeled away from the container sealing surface 200, effectively breaking the seal that was produced to construct the sealed container 10.

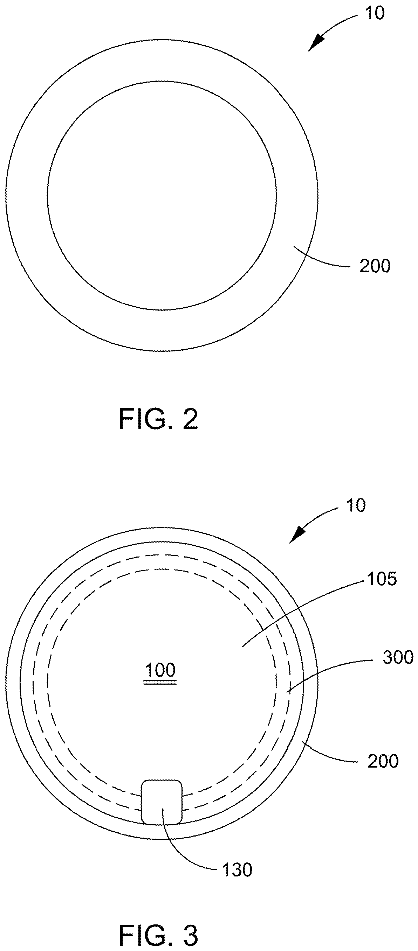

Figures 2 and 3 show the top view of an embodiment of a sealed container 10, before and after the peel off lid 105 attached, respectively. Figure 2 shows the container sealing surface 200. The container sealing surface 200 has an outer edge and an inner edge and is shown here to have a ring shape. The container sealing surface 200 could have any other shape, such as rectangular. In some cases, the inner edge of the sealing surface has a different shape than the outer edge of the sealing surface.

The interior of the container 10 is accessible through the hole in the center of the ring. In Figure 3, the peel off lid 105, constructed from the peelable and sealable lidstock 100, is attached to the container sealing surface 200 by seal 300. The boundaries of the seal 300 are shown by the dotted lines, and in this embodiment the seal is ring shaped. The peel off lid 105 overlaps the container sealing surface 200, and the two components are heat sealed to each other in this overlap region. The peel off lid 105 also comprises a peel tab 130 which can be grasped and pulled to initiate removal of the peel off lid 105 from the container sealing surface 200.

In some embodiments, seal 300 may be a heat seal. As used herein, "seal" or "sealable" refers to bonding two or more components together. In some cases, a seal bonds a lidding material to a container creating a hermetic environment inside the container. The seal may be formed by any means known, such as using heat by means of conduction, induction, or radiation (e.g. by infrared), usually together with applying a certain pressure. The seal may also be achieved by any other suitable mean, like for example by ultrasonic sealing. As used herein, "peel" or "peelable" refers to a seal that can be manually separated, either at the original interface or at another location within one of the components. The act of peeling may include fracturing a portion of one of the components, followed by cohesive failure within the component. Comparatively, a bond may be fusion sealed (not peelable) and manual force may cause complete fracture of one of the components or the container may not be opened manually.

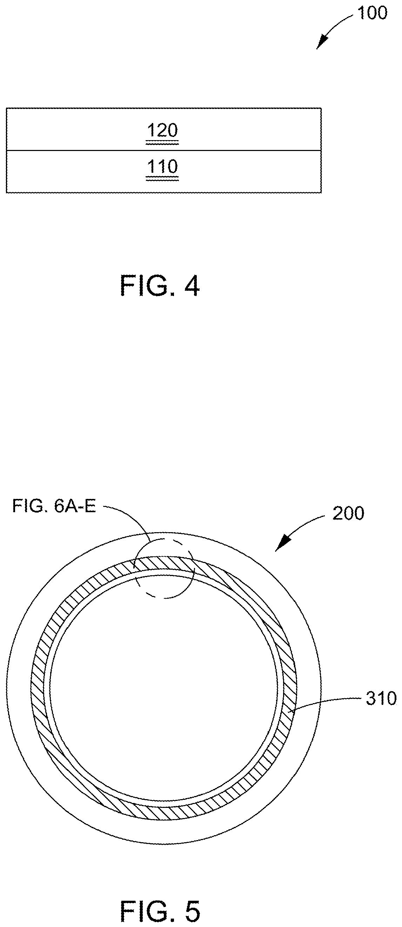

Figure 4 provides a cross-section of an embodiment of the peelable and sealable lidstock of the present invention. The embodiment shown in Figure 4, or any other embodiment of the peelable and sealable lidstock can be used to form a peel off lid of a sealed container. The peelable and sealable lidstock 100 has two layers, namely, a metal substrate 120 and a sealing layer 110. The sealing layer 110 may be directly or indirectly adhered to the metal substrate 120. The sealing layer 110 and the metal substrate 120 may be continuous with each other.

Embodiments of the peelable and sealable lidstock 100 may include other layers. For example, a continuous or discontinuous layer of ink may be applied to the side of the metal substrate 120 opposite of the sealing layer 110, providing graphics for the lid. Regardless of other layers, the sealing layer 110 is necessarily on the surface of the peelable and sealable lidstock 100 and this surface is in contact with the sealing surface 200 when used to close a sealed container 10.

The metal substrate of the peelable and sealable lidstock is preferably an aluminum foil with a thickness comprised between 20 and 200 micron.

The sealing layer of the present invention comprises polymeric materials, including a copolymer (A) comprising one or more polymerized olefin monomers and one or more polymerized ethylenically unsaturated (poly)carboxylic acid monomers and a copolymer (B) comprising one or more polymerized (meth)acrylate ester monomers, as well as one or more types of inorganic particles (C). This blend of materials is the sealing layer, as will be further detailed below, which allows for the advantageous sealing and peeling properties. Using the sealing layer as described herein, one can achieve excellent peeling force and burst strength which had been previously unachievable by thin, lacquer style seal layers. The performance of the lidstock is evidenced not only by the measurable peel force and burst strength, but also by the visual appearance of the remaining footprint after peeling.

The sealing layer includes from 70 % to 89 % by weight of copolymer (A), from 10 % to 29 % by weight of a copolymer (B), and from 1 % to 15 % by weight of one or more inorganic particles (C).

Copolymer (A) of the seal layer described herein includes one or more polymerized olefin monomers and one or more polymerized ethylenically unsaturated (poly)carboxylic acid monomers. In some embodiments, copolymer (A) includes from 60 % to 90 % by weight of one or more polymerized olefin monomers, and from 10 % to 40 % by weight of one or more polymerized ethylenically unsaturated (poly)carboxylic acid monomers. In some embodiments, the polymerized ethylenically unsaturated (poly)carboxylic acid monomers of copolymer (A) are selected from the group consisting of (meth)acrylic acid, maleic acid, fumaric acid, crotonic acid and itaconic acid.

In some embodiments of the peelable and sealable lidstock, the olefin monomer of copolymer (A) is ethylene and the ethylenically unsaturated (poly)carboxylic acid of copolymer (A) is acrylic acid and/or methacrylic acid.

In some embodiments of the peelable and sealable lidstock, copolymer (A) comprises from 15 % to 30 % by weight of polymerized (meth)acrylic acid and from 85 % to 70 % by weight, of polymerized ethylene.

Copolymer (B) of the seal layer described herein includes one or more polymerized (meth)acrylate ester monomers. In some embodiments of the peelable and sealable lidstock, copolymer (B) includes one or more polymerized (meth)acrylate ester monomers selected from methyl-, ethyl- and the linear and branched propyl-, butyl, amyl-, hexyl-, heptyl-, octyl- (meth)acrylate esters. Copolymer (B) may comprise polymerized methyl (meth)acrylate and butyl (meth)acrylate; more preferably copolymer (B) comprises polymerized methyl methacrylate and butyl (meth)acrylate; most preferably copolymer (B) comprises polymerized methyl methacrylate and butyl methacrylate.

Copolymer (B) may comprise polymerized (meth)acrylate C1-C8 ester monomers, comprising between 5 % and 75 % by weight of methyl methacrylate and between 25 % and 95 % by weight of butyl methacrylate, based on the total of methyl methacrylate and butyl methacrylate, and up to 30 % by weight of one or more alkyl(meth)acrylates selected from the group consisting of C2-alkyl (meth)acrylates, C3-alkyl (meth)acrylates, C4-alkyl (meth)acrylates, C5-alkyl (meth)acrylates, C6-alkyl (meth)acrylates, C7-alkyl (meth)acrylates, C8-alkyl (meth)acrylates and mixtures thereof, based on the total of C1-C8 alkyl (meth)acrylates.

In some embodiments of the peelable and sealable lidstock, the copolymer (B) of the sealing layer includes polymerized (meth)acrylate C1-C8 ester monomers, comprising between 40 % and 90 % by weight of methyl methacrylate and between 10 % and 60 % by weight of butyl methacrylate, based on the total of methyl methacrylate and butyl methacrylate, and up to 20 % by weight of one or more alkyl(meth)acrylates selected from the group consisting of C2-alkyl (meth)acrylates, C3-alkyl (meth)acrylates, C4-alkyl (meth)acrylates, C5-alkyl (meth)acrylates, C6-alkyl (meth)acrylates, C7-alkyl (meth)acrylates, C8-alkyl (meth)acrylates and mixtures thereof, based on the total of C1-C8 alkyl (meth)acrylates.

Copolymer (B) further may comprise up to 30 % by weight of one or more polymerized ethylenically unsaturated (poly)carboxylic acid monomers selected from the group consisting of (meth)acrylic acid, maleic acid, fumaric acid, crotonic acid and itaconic acid, based on the total of C1-C8 alkyl (meth)acrylates and ethylenically unsaturated (poly)carboxylic acid monomers. Preferred ethylenically unsaturated (poly)carboxylic acid monomers are acrylic acid and methacrylic acid.

Copolymer (B) can be further characterized by a glass transition temperature of more than 15 °C, preferably of more than 20 °C, more preferably of more than 30 °C, as measured by Differential Scanning Calorimetry, according to ASTM D 3418-03. Copolymer (B) may be characterized by a glass transition temperature, as measured by Differential Scanning Calorimetry, according to ASTM D 3418-03, between 55 and 75 °C, or between 60 and 70 °C.

The qualitative and quantitative data on the composition of the blend of copolymer (A) and copolymer (B) as well as on the individual copolymers (A) and (B) are obtainable from the dried film (i.e. the sealing layer) comprising the blend of copolymer (A) and copolymer (B), and/or from a dried film of copolymer (A) and the dried film of copolymer (B), by methods well known in the art.

The inorganic particles (C) may be selected from metals, oxides, hydroxides, carbonates, sulfates, phosphates, silicates and mixtures thereof. Preferably the inorganic particles (C) are selected from the group consisting of halloysite, kaolinite, illite, montmorillonite, vermiculite, talc, sepiolite, palygorskite, pyrophyllite and mixtures thereof. In an embodiment of the peelable and sealable lidstock, the inorganic particles of the sealing layer are talc particles (Mg₃Si₄O₁₀(OH)₂ hydrated magnesium silicate).

The sealing layer of the present invention may comprise inorganic particles up to 15 %, 14 %, 13 %, 12 %, 11 %, 10 %, 9 %, 8 %, 7 %, 6 % or 5 %, by weight. The polymeric sealing layer of the present invention may comprise inorganic particles greater than 0.5 %, 1 %, 2 %, or 3%, by weight. For example, the sealing layer may comprise between 1 % and 10 % by weight, or between 0.5 % and 5 % by weight of inorganic particles (C). The inorganic particles are characterized by a mass median diameter (D₅₀) between 1 and 5 microns. The inorganic particles may be characterized by a mass median diameter (D₅₀) of less than 5 microns, between 0.5 and 4 microns, or between 0.5 and 3 microns. As used herein, the "mass median diameter" (or mass median particle diameter) is the particle diameter at which 50 % of the particles are larger by mass, and 50 % of the particles are smaller by mass, when examining the particle size distribution.

The inorganic particles may be characterized by a particle size distribution having a D₉₈ of less than 10 microns, or between 4 and 9 microns, or between 4 and 8 microns. The inorganic particles may be characterized by a particle distribution having a D₁₀ of less than 1 micron, or between 0.1 and 0.9 micron, or between 0.1 and 0.8 micron. As used herein, the Dₓ value of a particle size distribution is the diameter of particle wherein X % of the particles, by mass, are smaller than this value. For example, if the D₁₀ of a particle size distribution is 5 microns, 10% of the particles by mass have a diameter smaller than 5 microns. The Dₓ values can be determined by the SediGraph according to ISO 13317.

The sealing layer may be formed by applying a water-based heat-seal lacquer containing copolymer (A), copolymer (B) and inorganic particle (C), as described herein, to the metal substrate layer. The water-based heat-seal lacquer may be an aqueous dispersion having between 10 % and 60 % by weight, or between 20 and 50 % by weight of solid content. The water-based heat-seal lacquer may be a blend of a first aqueous dispersion containing copolymer (A), a second aqueous dispersion containing copolymer (B) and the inorganic particles (C).

A suitable aqueous dispersion comprising copolymer (A) is commercially available for heat-seal applications, for example from Michelman under the product range of Michem^{®} Prime or from Paramelt under the product range of Aquaseal^{®}. It is well-known to someone skilled in the art, that an aqueous dispersion of copolymers of polymerized olefin monomers and ethylenically unsaturated (poly)carboxylic acid monomers comprises a neutralizing agent, converting the carboxylic acid group in a tertiary ammonium carboxylate or an alkali metal carboxylate group. A suitable aqueous dispersion comprising copolymer (B) is commercially available for heat-seal or primer applications, for example from company Evonik under the range of Degalan^{®} or from company Synthomer under the range of Plextol^{®}. The water-based lacquer comprising copolymer (A), copolymer (B), and the inorganic particles (C) may be obtained from a stirred mixture of a water-based dispersion comprising copolymer (A) and a water-based dispersion comprising copolymer (B) to which the inorganic particles (C) are added while stirring.

The water-based lacquer is applied on one side of the metal substrate, by spray coating, curtain coating, roll coating, or any other suitable coating method. Preferably the coating application is applied by roll coating. The lacquer is then dried, removing most of the liquid and leaving the resulting sealing layer. After application, the water-based lacquer may be dried in an air ventilated oven, using convection heat or infrared or a combination of convection heat and infrared, regulated in such a way as to obtain a metal temperature of at least 190 °C, or at least 195 °C, said metal temperature being maintained for less than 15 seconds, or for a time period between 1 and 10 seconds, or for a time period between 2 and 8 seconds, or for a time period between 2 and 5 seconds.

The water-based lacquer is applied at a thickness (i.e. coating weight) to ensure a final sealing layer thickness, after drying, between 2 and 13 microns, or between 4 and 10 microns, or between 5 and 9 microns, or between 6 and 8 microns.

The metal substrate may also be provided with a protective lacquer on a side opposite the sealing layer. The protective lacquer helps during processing of coil-type substrates, to prevent sticking of the sealing side, both during coating and during unwinding before further processing. Furthermore, it protects the bare aluminum from corrosion during use of the lidstock in packaging applications. A preferred protective lacquer has a coating thickness comprised between 0.5 and 2.5 microns, or between 1.0 and 2.0 microns, or between 1.2 and 1.8 microns.

In some embodiments, the lidstock is further provided with a print primer on a side opposite the sealable coating. The print primer facilitates application of printed labeling on the substrate. A preferred print primer has a coating thickness of less than 2.5 microns, or less than 2 microns, or less than 1.8 microns.

In an embodiment of a method to produce the peelable and sealable lidstock, a roll (i.e. coil of web-based material) of the metal substrate is unwound, coated with the water-based lacquer comprising copolymer (A), copolymer (B) and inorganic particles (C). The coated metal substrate is then heated to dry the lacquer, leaving the sealing layer behind and creating the peelable and sealable lidstock. Finally, lidstock is rewound to a roll. The coil of coated metal foil (i.e. lidstock) may subsequently be unwound for further processing. Further processing may include slitting into narrower rolls, cutting into sheet formats or stamping to create die cut lids of any desired shape.

### FOOTPRINT DESCRIPTIONS

As previously discussed, the performance of the sealing layer of the peelable and sealable lidstock may be evidenced by the footprint remaining on the container sealing surface of the container after the peel off lid has been removed. As used herein, the "footprint" of the seal is a visually perceptible remnant of the seal, consisting of a small amount of the sealing layer remaining on the container sealing surface, the remaining material having a slightly opaque or white-ish appearance. This visible material is the footprint.

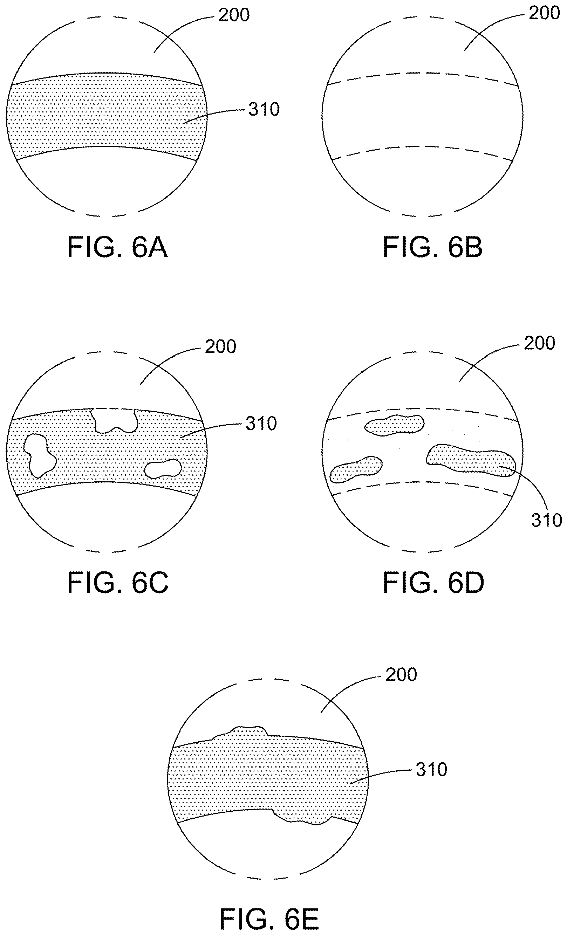

The blend of materials used in the sealing layer, as described herein, unexpectedly and advantageously provides for a consistent cohesive failure of the sealing layer upon applying a force to peel the lidstock away from the container sealing surface. This consistent cohesive failure can be visually detected in the footprint of the seal. A superior footprint, indicating good cohesive failure, is comparatively even and clean due to the consistent method by which the seal fails. Furthermore, the footprint is desirable as it is perceived by brand owners, consumers and others as an indicator of a perfect or tight seals. It may even be desirable as a tamper evidence feature. Figures 6A shows a footprint as a result of the current invention. Figures 6B through 6E explain the insufficient footprint of previously used sealing layers.

Figure 6A shows an embodiment of an uninterrupted, sharply defined footprint on the sealing surface of the container after removing the peel off lid, according to the invention. The sealed container may be characterized by the container sealing surface presenting an uninterrupted, sharply defined footprint of sealing layer remaining after peeling away the peel off lid. As shown by the even texture and straight edges, the footprint mimics the seal area (i.e. the area affected by pressure and heat or another sealing mechanism). There are very few or no gaps in the visual appearance of the footprint. This is evidence of a very consistent cohesive failure within the sealing layer of the peelable and sealable lidstock.

Figure 6B shows an embodiment of an undesired footprint on the sealing surface of the container after removing the peel off lid. The dotted lines indicate where the seal had been effected. As shown, there is no visual indication of the seal. Upon peeling, the sealing layer has separated from the container sealing surface in an adhesive manner. This is undesirable as adhesive failure provides less consistent seal properties as compared to cohesive failure within the sealing layer.

Figure 6C shows an embodiment of an undesired footprint on the sealing surface of the container after removing the peel off lid. As shown, there are significant gaps in the visual appearance of the footprint. The dotted lines indicate where the seal had been effected. Figure 6D shows another embodiment of an undesired footprint on the sealing surface of the container after removing the peel off lid. As shown, there are only small areas of the footprint apparent. The dotted lines indicate where the seal had been effected. The footprints shown in Figures 6C and 6D are undesirable as they are indicative of inconsistent cohesive failure within the sealing layer of the peelable and sealable lidstock.
Figure 6E shows an embodiment of an undesired footprint on the sealing surface of the container after removing the peel off lid. As shown, the footprint has uneven edges, indicating that the cohesive failure of the sealing layer has extended beyond the edge of the effected seal.

### PEEL FORCE AND BURST STRENGTH

As described previously, a sealed container may be formed by heat sealing a peel off lid, constructed from the peelable and sealable lidstock, to the sealing surface of a container body. The seal forms a hermetic seal protecting the product therein.

The sealed container may be characterized by an average peel force between the peel-off lid and the container sealing surface of between 8 and 15 N, according to ASTM F2824-10 when the test is run at a 45° angle. The sealed container may be characterized by an initial maximum peel force of between 15 and 40 N, according to ASTM F2824-10 (45° angle).

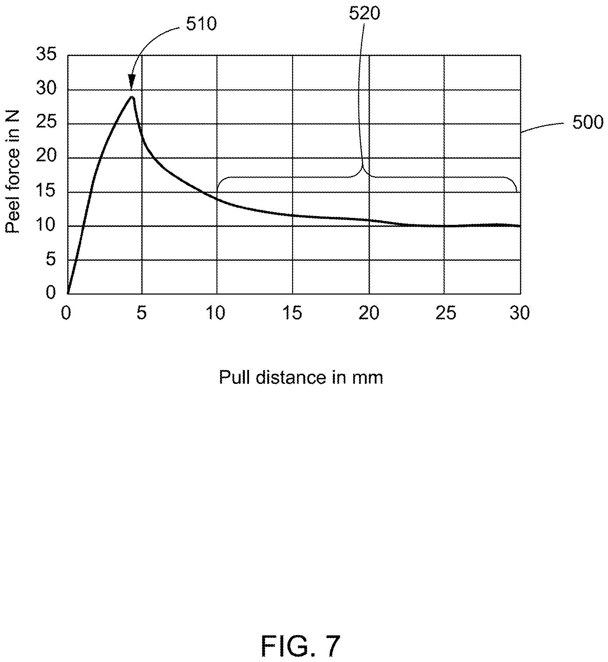

Figure 7 shows an example of a peel strength curve 500 that may be obtained by testing a sealed container as described herein by ASTM F2824-10. For the peel test shown in Figure 7, the lid is pulled approximately halfway open and is not pulled completely from the container. The peel strength curve 500 shows the measured seal strength (i.e. peel strength or peel force) as a function of distance that the test fixture (i.e. test arm) has traveled. As used herein, the initial maximum peel force 510 is the peak peel force measured at the beginning of the test and is a result of the seal fracture. As used herein, the average peel force is the calculated average of the relatively "flat" data peel force measurements 520 taken during test. The average peel force is the force required to propagate the peel across the container.

The sealed container may be characterized by a burst strength of at least 2 bar, according to ASTM F1140/F1140M-13, Test Method A. The burst strength test may be performed on a complete sealed container, or on a peel off end unit, metal ring plus peelable and sealable lidding, as is known in the art. Following Test Method A, the metal rings (200) of peel off ends are fixed in a way that the peel off lid (105) can deform in an unrestrained fashion by the applied pneumatic pressurization. The burst strength is given by the measured maximum pressure, before the package fails. In the desired case, failure does not occur at the seal area of a sealed container but is given by a fracture strength of the lidding material.

### EXAMPLES

The following illustrative examples are merely meant to exemplify the present invention, but they are not intended to limit or otherwise define the scope of the present invention.

Sealing lacquers were made using the following components: water-based dispersion (DA) of copolymer (A), water-based dispersion (DB1) of copolymer (B1), water-based dispersion (DB2) of copolymer (B2) and inorganic particles (C1), (C2) and (C3). The materials and blends are described below.

Copolymer (A) is obtained from the polymerization of between 5 % and 10 % by mole of methacrylic acid and 93.5 % by mole of ethylene. Dispersion (DA) has a pH of 8.5 +/- 0.5; a solid content of 40 +/- 1 %, and a viscosity of 50 +/-2 s. A dried film of dispersion (DA), i.e. a solid film of copolymer (A) has a melting peak of 90 °C, a degree of crystallinity of 11 % (from comparing the melting enthalpy from DSC, with the melting enthalpy of 295 J/g of pure polyethylene) and a time-dependent second endothermic peak at 50 °C, sometimes also referred to as room temperature annealing peak in the literature.

Copolymers (B1) and (B2) are obtained from the polymerization of between 65 % and 70 % by mole of methyl methacrylate, about 25 % by mole of butyl methacrylate and between 5 % and 10 % by mole of methacrylic acid. Dispersion (DB1) and (DB2) were adjusted to a pH of 8.6 +/- 0.5, a solid content of 50 +/- 1 %, and a viscosity of 150 +/- 15 mPa·s. A dried film of copolymer (B1) has a glass transition temperature of 70 °C. A dried film of copolymer (B2) has a glass transition temperature of 69 °C.

For pH value measurement, indicator stripes type MColorpHast, purchased from Merck, were used. Solid content was determined using a Mettler Toledo HR83 Halogen Moisture Analyzer. In the case of dispersions of copolymer (A), viscosity was measured according to DIN 53211, using DIN flow cup size 4 mm. For dispersions of copolymer (B), viscosity was measured according to DIN EN ISO 2555, using a spindle number 2, a rotational speed of 100 rotations per minute, at 20 °C. All DSC measurements were performed according to ASTM D3418-03.

Sealing lacquers were made by blending the water-based dispersions comprising copolymer (A) and copolymer (B1) or copolymer (A) and copolymer (B2). The blends of dispersions were mixed for 15 minutes at room temperature by means of a lab stirrer.

To the blended water-based dispersion thus obtained, inorganic particles (C1), (C2), or (C3) were added and the water-based dispersions comprising the particles were stirred for another 15 minutes. The inorganic particles used were as follows: (C1) is talc, i.e. Finntalc^{®} M05SL from Elementis, characterized by D₅₀ of 2.2 microns and D₉₈ of 7.5 microns (ISO 13317); (C2) is talc, i.e. Jetfine^{®} 1A from Imerys, characterized by D₅₀ of 1.1 microns and D₉₈ of 4.8 microns (ISO 13317); (C3) is kaolin, i.e. Speswhite^{®} from Imerys, characterized by D₅₀ of 0.7 microns and D₉₈ of 5.9 microns (ISO 13317).

The thus obtained water-based dispersions (water-based lacquers) were applied onto an aluminum substrate, with substrate thickness of either 60 microns or 90 microns, by means of a doctor blade, to obtain a final sealing layer thickness between 6 and 13 microns. The dry sealing layer was obtained by transferring the coated aluminum substrates, directly after the coating process, to an air ventilated oven for 15 seconds (15 seconds corresponds to heating-up time (10 to 12 seconds) + time at 197°C (3 to 5 seconds) ); the oven settings were controlled to obtain a substrate temperature of 197 °C, as measured by temperature indicator stripes, commercially available from Reatec.

The composition of the lidstock examples produced are shown in Table 1. The values shown for A, B1, B2, C1, C2 and C3 are the weight percentage of these components in the dried sealing layer composition.

**Table 1: Composition of Sample Lidstock (Examples of the invention 1-7, and Comparative Examples 8-10)**

| Sample Lidstock | A1 | B1 | B2 | C1 | C2 | C3 | Substrate Thickness (microns) | Sealing Layer Thickness (microns) |
|---|---|---|---|---|---|---|---|---|
| | (weight % in dried sealing layer) | | | | | | | |
| 1 | 75.2 | 20 | -- | 4.8 | -- | -- | 90 | 9.6 |
| 2 | 78 | 18 | -- | 4 | -- | -- | 90 | 7 |
| 3 | 78 | 18 | -- | 4 | -- | -- | 90 | 12.8 |
| 4 | 72.5 | -- | 18 | -- | 9.5 | -- | 90 | 10.1 |
| 5 | 77.5 | -- | 20.6 | 1.9 | -- | -- | 90 | 6.8 |
| 6 | 77.5 | -- | 20.6 | 1.9 | -- | -- | 60 | 6.8 |
| 7 | 77.5 | -- | 20.6 | -- | -- | 1.9 | 90 | 7.1 |
| 8 | 81.5 | -- | 18.5 | -- | -- | -- | 90 | 7.8 |
| 9 | 75 | 25 | -- | -- | -- | -- | 90 | 10 |
| 10 | 79 | | 21 | | | | 90 | 8.1 |

After cooling to room temperature, circular blanks of diameter 96 mm, exhibiting a pull tab, were die cut from the sample lidstocks. The circular blanks were heat sealed to the metallic surface of suitable tinplate rings at a temperature of 200 °C, in both the upper and lower jaw, with a pressure of 730 N/cm² for 0.5 seconds. Tinplate rings used tin coating weight of 2.8 g/m² and passivation 300 on sealing side, as are known to those skilled in the art.

Peel test on tinplate with various types of passivation, e.g. according to code 300, 311, 314, and 555 did show comparable results. Similarly, the ageing effect sometimes observed with passivated tinplate surfaces, did not have a notable effect on the measured properties of assemblies using the claimed lidstock. The codes for the different types of passivation refer to:
300: Dip passivation; 1-3 mg/m2 Chromium
311: Electrochemical passivation; 3.5-9 mg/m2 Chromium
314: Electrochemical passivation; >5 mg/m2 Chromium
555: Chrome-free passivation; 0.8-1.2 mg/m2 Titanium

The prepared sealed assemblies (peel off ends) were tested after conditioning at 23 °C and 50 % relative humidity for 24 hours. Average peel force, initial maximum peel force and burst pressure test results are reported in Table 2, wherein samples 1 to 7 are examples according to the invention, and samples 8 and 9 are comparative examples.

**Table 2: Testing Results of Sample Assemblies (Lids) (Examples of the invention 1-7, and Comparative Examples 8-10)**

| Sample Assembly | Average Peel Force (N)¹ | Initial Maximum Peel Force (N)¹ | Burst Strength (bar)² | Burst Failure Mode² | Footprint³ |
|---|---|---|---|---|---|
| 1 | 10.5 | 28 | 2.7 | rupture | 6A |
| 2 | 13.3 | 31.3 | 2.9 | rupture | 6A |
| 3 | 10.2 | 26.6 | 3 | rupture | 6A |
| 4 | 8.2 | 18 | 2.8 | rupture | 6A |
| 5 | 10.5 | 26.5 | 2.9 | rupture | 6A |
| 6 | 9.8 | 22.5 | 2 | rupture | 6A |
| 7 | 8.1 | 18.6 | 2.9 | rupture | 6A |
| 8 | 7.2 | 16 | 0.8 | peel | 6D |
| 9 | 7.3 | 14.8 | 0.4 | peel | 6A |
| 10 | 11.1 | 25.9 | 3 | rupture | 6E |

| | | | | | |
|---|---|---|---|---|---|
| ¹ The Average Peel Force and the Initial Maximum Peel Force is measured according to ASTM F2824-10; ² The Burst Strength is measured according to ASTM F1140/F1140M-13, Test Method A. The Burst Failure Mode indicates whether the burst was measured as seal failure (peel) or material failure, i.e. tear (rupture); ³ The Footprint indicates the visual evaluation of the seal layer on metal edge of the container, referring to Figures 6A-E. | | | | | |

The peel force was measured on a Zwick 1425 tensile tester, at a pulling speed of 100 mm/min; tests were performed according to ASTM F2824-10 (2015), at a pull angle of 45°. The analysis of the initial maximum peel force and the average peel force were determined using a partial peel distance, i.e. the entire lid was not peeled away from the container. The peel force testing was completed using a test unit arm travel distance (i.e. pull distance) of 30 mm which results in a peel distance of about 17 mm. Peel force data were obtained from an average of three consecutive measurements.

The different test results of Example 5 and Example 6 are due to different aluminum substrate thicknesses.

Comparative Example 9 has a sealing layer with a similar polymeric composition to Example 1. However, Comparative Example 9 has no inorganic component. This results in a very low burst strength.

Comparative Example 8 has a sealing layer with a similar polymeric composition to Examples 4, 5, 6 and 7. However, Comparative Example 8 has no inorganic component. This results in a low burst strength and a poor footprint.

Comparing lidstock sample 2 and 3 shows increasing initial and maximum peel force, as is expected by increasing layer thickness, from mechanical principles. Considering that layer thickness is almost doubled, however, the increase is very much still in a preferable range, as surprisingly found for the heat seal mixture described herein. Meaning, the lidstock material is stable regarding possible variations in coating film thickness.

Comparing lidstock sample 9 and 10 shows, that, being in a preferable peel force range, by using only polymeric components, usually low burst pressure values are found, when the footprint criteria is met. Vice versa, at sufficiently high burst pressure values, usually the footprint exhibits an undesirable appearance. By adding the inorganic component (C), it was found that all criteria could be matched. Even in a range of different combinations of (A), (B), and (C), as for example seen by comparison to the examples 1-7, according to the present invention.

Contrary to the extrusion coating process of sealable layers, the lacquer coating process allows for very low sealing layer thicknesses; yet the lower limit of seal layer thickness is determined by the roughness of the aluminum lidstock, for example Ra = 0.5 microns and Rmax = 3-4 microns, and the roughness of the container sealing surface substrate, e.g. tinplate steel (Ra = 0.2 micron) and by the requirement to obtain a full coverage and saturated footprint on the metal edge substrate. For these reasons the thickness of the sealable layer in general results in a typical range of from 6 to 8 microns.

Variations of Sample Assembly 5 were built using varying sealing conditions. These variation of the assembly were then tested for average peel force, initial maximum peel force and burst strength, using the test methods previously described. The results of these tests, along with burst failure mode and footprint analysis are shown in Table 3. This testing is an indication that the inventive concepts disclosed in this application surprisingly result in robust performance for lidding applications. The results of the testing are excellent over a wide range of sealing temperature, sealing pressure and sealing time.

**Table 3: Testing Results of Sample Assembly 5 at Different Sealing Conditions**

| Sealing Jaw Temperature (°C)¹ | Sealing Pressure (N/cm²) | Sealing Time (s) | Average Peel Force (N)² | Initial Maximum Peel Force (N)² | Burst Strength (bar)³ | Burst Failure Mode³ | Footprint⁴ |
|---|---|---|---|---|---|---|---|
| 150 | 1043 | 0.5 | 10.1 | 23.3 | 3 | rupture | 6A |
| 160 | 626 | 0.5 | 9.6 | 24.4 | 3 | rupture | 6A |
| 160 | 1043 | 0.5 | 10.7 | 23.9 | 3 | rupture | 6A |
| 180 | 1043 | 0.5 | 11.2 | 27 | 3 | rupture | 6A |
| 200 | 626 | 0.3 | 10.6 | 26 | 2.9 | rupture | 6A |
| 200 | 1043 | 0.3 | 9.9 | 23.7 | 2.9 | rupture | 6A |
| 200 | 1043 | 0.5 | 10.4 | 24.6 | 3 | rupture | 6A |

| | | | | | | | |
|---|---|---|---|---|---|---|---|
| ^{1.}Similar temperature on upper and lower jaw ² The Average Peel Force and the Initial Maximum Peel Force is measured according to ASTM F2824-10; ³ The Burst Strength is measured according to ASTM F1140/F1140M-13, Test Method A. The Burst Failure Mode indicates whether the burst was measured seal failure (peel) or material failure or tear (rupture); ⁴ The Footprint indicates the visual evaluation of the seal layer on metal edge of the container, referring to Figures 6A-E. | | | | | | | |

## Claims

1. A peelable and sealable lidstock comprising a metal substrate and a sealing layer, the sealing layer comprising:
from 70 % to 89 % by weight, of a copolymer (A) comprising one or more polymerized olefin monomers and one or more polymerized ethylenically unsaturated (poly)carboxylic acid monomers;
from 10 % to 29 % by weight of a copolymer (B) comprising one or more polymerized (meth)acrylate ester monomers; and
from 1 % to 10 % by weight of one or more inorganic particles (C) **characterized by** a mass median diameter (D50) comprised between 1 and 5 microns.

2. The peelable and sealable lidstock according to claim 1 wherein the inorganic particles (C) are **characterized by** a particle size distribution comprising a D₉₈ of less than 10 micron and a D₁₀ of less than 1 micron.

3. The peelable and sealable lidstock according to any preceding claim wherein:
copolymer (A) comprises from 55 % to 90 % by weight of one or more polymerized olefin monomers, and from 10 % to 35 % by weight of one or more polymerized ethylenically unsaturated (poly)carboxylic acid monomers selected from the group consisting of (meth)acrylic acid, maleic acid, fumaric acid, crotonic acid and itaconic acid; and
copolymer (B) comprises one or more polymerized (meth)acrylate C1-C8 ester monomers.

4. The peelable and sealable lidstock according to any preceding claim, wherein copolymer (B) comprises up to 30 % by weight of one or more polymerized ethylenically unsaturated (poly)carboxylic acid monomers selected from the group consisting of (meth)acrylic acid, maleic acid, fumaric acid, crotonic acid and itaconic acid.

5. The peelable and sealable lidstock according to any preceding claim wherein the inorganic particles (C) are selected from the group consisting of halloysite, kaolinite, illite, montmorillonite, vermiculite, talc, sepiolite, palygorskite, pyrophyllite and mixtures thereof.

6. The peelable and sealable lidstock according to any preceding claim wherein the inorganic particles (C) comprise a particle size distribution comprising a D₉₈ of 8 microns or less.

7. The peelable and sealable lidstock according to any preceding claim wherein the inorganic particles (C) comprise a particle size distribution comprising a D₉₈ of 6 microns or less.

8. The peelable and sealable lidstock according to any preceding claim wherein the metal substrate is an aluminium foil with a thickness between 20 and 200 microns.

9. The peelable and sealable lidstock according to any preceding claim wherein copolymer (A) comprises from 70 % to 85 % by weight of polymerized ethylene, and from 15 % to 30 % by weight of (meth)acrylic acid.

10. The peelable and sealable lidstock according to any preceding claim wherein copolymer (B) comprises a polymerized mixture of methyl methacrylate and butyl (meth)acrylate.

11. The peelable and sealable lidstock according to any preceding claim wherein copolymer (B) comprises a polymerized mixture of methyl methacrylate, butyl (meth)acrylate and methacrylic acid.

12. The peelable and sealable lidstock according to any preceding claim wherein the sealing layer comprises between 1 % and 5 % by weight of inorganic particles (C).

13. The peelable and sealable lidstock according to any preceding claim wherein the thickness of the sealing layer is between 2 and 13 microns.

14. The peelable and sealable lidstock according to any preceding claim wherein the thickness of the sealing layer is between 4 and 10 microns.

15. The peelable and sealable lidstock according to any preceding claim wherein the thickness of the sealing layer is between 6 and 9 microns.

16. A method for producing the peelable and sealable lidstock according to any of claims 1 to 15, comprising the steps of:
unwinding a coil of the metal substrate;
applying a water-based lacquer comprising copolymer (A), copolymer (B) and inorganic particles (C) on the unwound metal substrate by means of a coating system; and
drying the water-based lacquer to form the sealing layer, resulting in the peelable and sealable lidstock comprising the metal substrate and the sealing layer; and
wherein the thickness of the sealing layer is between 2 and 13 microns.

17. The method according to claim 16, wherein the water-based lacquer has a solids content between 35 % and 55 % by weight.

18. A sealed container comprising a peel off lid sealed to a container sealing surface, said lid comprising the peelable and sealable lidstock according to any of claims 1 to 15, wherein
the container sealing surface is a rigid ring;
an average peel force between the peel off lid and the container sealing surface ranges between 8 and 15 N according to ASTM F2824-10 (45° peel angle);
a burst strength of the sealed container is at least 2 bar according to ASTM F1140/F1140M-13, Test Method A; and
the container sealing surface presents an uninterrupted, sharply defined footprint of sealing layer remaining after peeling away the peel off lid.

19. The sealed container according to claim 18 wherein an initial maximum peel force between the peel off lid and the container sealing surface is between 15 and 40 N according to ASTM F2824-10 (45° peel angle).

20. The sealed container according to claim 18 or 19, wherein the container sealing surface is selected from the group consisting of bare tinplate, tin-free steel and aluminum.

## Patentansprüche

1. Abziehbares und siegelbares Deckelmaterial, umfassend ein Metallsubstrat und eine Siegelschicht, wobei die Siegelschicht umfasst:
von 70 bis 89 Gew.-% eines Copolymers (A), das ein oder mehrere polymerisierte Olefinmonomere und ein oder mehrere polymerisierte ethylenisch ungesättigte (Poly)carbonsäuremonomere umfasst;
von 10 bis 29 Gew.-% eines Copolymers (B), das ein oder mehrere polymerisierte (Meth)acrylatestermonomere umfasst; und
von 1 bis 10 Gew.-% eines oder mehrerer anorganischer Partikel (C), **gekennzeichnet durch** einen Massenmedian-Durchmesser (D50) zwischen 1 und 5 Mikrometern.

2. Abziehbares und siegelbares Deckelmaterial nach Anspruch 1, wobei die anorganischen Partikel (C) durch eine Partikelgrößenverteilung gekennzeichnet sind, die einen D₉₈-Wert von weniger als 10 Mikrometern und einen D₁₀-Wert von weniger als 1 Mikrometer umfasst.

3. Abziehbares und siegelbares Deckelmaterial nach einem der vorhergehenden Ansprüche, wobei:
das Copolymer (A) von 55 bis 90 Gew.-% eines oder mehrerer polymerisierter Olefinmonomere und von 10 bis 35 Gew.-% eines oder mehrerer polymerisierter ethylenisch ungesättigter (Poly)carbonsäuremonomere, ausgewählt aus der Gruppe, bestehend aus (Meth)acrylsäure, Maleinsäure, Fumarsäure, Crotonsäure und Itaconsäure, umfasst; und
das Copolymer (B) ein oder mehrere polymerisierte (Meth)acrylat-C1-C8-ester-Monomere umfasst.

4. Abziehbares und siegelbares Deckelmaterial nach einem der vorhergehenden Ansprüche, wobei das Copolymer (B) bis zu 30 Gew.-% eines oder mehrerer polymerisierter ethylenisch ungesättigter (Poly)carbonsäuremonomere, ausgewählt aus der Gruppe, bestehend aus (Meth)acrylsäure, Maleinsäure, Fumarsäure, Crotonsäure und Itaconsäure, umfasst.

5. Abziehbares und siegelbares Deckelmaterial nach einem der vorhergehenden Ansprüche, wobei die anorganischen Partikel (C) aus der Gruppe bestehend aus Halloysit, Kaolinit, Illit, Montmorillonit, Vermiculit, Talk, Sepiolith, Palygorskit, Pyrophyllit und Mischungen davon ausgewählt sind.

6. Abziehbares und siegelbares Deckelmaterial nach einem der vorhergehenden Ansprüche, wobei die anorganischen Partikel (C) eine Partikelgrößenverteilung umfassen, die einen D₉₈-Wert von 8 Mikrometern oder weniger umfasst.

7. Abziehbares und siegelbares Deckelmaterial nach einem der vorhergehenden Ansprüche, wobei die anorganischen Partikel (C) eine Partikelgrößenverteilung umfassen, die einen D₉₈-Wert von 6 Mikrometern oder weniger umfasst.

8. Abziehbares und siegelbares Deckelmaterial nach einem der vorhergehenden Ansprüche, wobei das Metallsubstrat eine Aluminiumfolie mit einer Dicke zwischen 20 und 200 Mikrometern ist.

9. Abziehbares und siegelbares Deckelmaterial nach einem der vorhergehenden Ansprüche, wobei das Copolymer (A) von 70 bis 85 Gew.-% polymerisiertes Ethylen und von 15 bis 30 Gew.-% (Meth)acrylsäure umfasst.

10. Abziehbares und siegelbares Deckelmaterial nach einem der vorhergehenden Ansprüche, wobei das Copolymer (B) eine polymerisierte Mischung aus Methylmethacrylat und Butyl(meth)acrylat umfasst.

11. Abziehbares und siegelbares Deckelmaterial nach einem der vorhergehenden Ansprüche, wobei das Copolymer (B) eine polymerisierte Mischung aus Methylmethacrylat, Butyl(meth)acrylat und Methacrylsäure umfasst.

12. Abziehbares und siegelbares Deckelmaterial nach einem der vorhergehenden Ansprüche, wobei die Siegelschicht zwischen 1 und 5 Gew.-% anorganische Partikel (C) umfasst.

13. Abziehbares und siegelbares Deckelmaterial nach einem der vorhergehenden Ansprüche, wobei die Dicke der Siegelschicht zwischen 2 und 13 Mikrometer beträgt.

14. Abziehbares und siegelbares Deckelmaterial nach einem der vorhergehenden Ansprüche, wobei die Dicke der Siegelschicht zwischen 4 und 10 Mikrometern beträgt.

15. Abziehbares und siegelbares Deckelmaterial nach einem der vorhergehenden Ansprüche, wobei die Dicke der Siegelschicht zwischen 6 und 9 Mikrometern beträgt.

16. Verfahren zum Herstellen des abziehbaren und siegelbaren Deckelmaterials nach einem der Ansprüche 1 bis 15, umfassend die Schritte:
Abwickeln einer Spule des Metallsubstrats;
Aufbringen eines Lacks auf Wasserbasis, der das Copolymer (A), das Copolymer (B) und anorganische Partikel (C) umfasst, auf das abgewickelte Metallsubstrat mittels eines Beschichtungssystems; und
Trocknen des Lacks auf Wasserbasis, um die Siegelschicht auszubilden, wodurch das abziehbare und siegelbare Deckelmaterial erlangt wird, welches das Metallsubstrat und die Siegelschicht umfasst; und
wobei die Dicke der Siegelschicht zwischen 2 und 13 Mikrometern beträgt.

17. Verfahren nach Anspruch 16, wobei der Lack auf Wasserbasis einen Feststoffgehalt zwischen 35 und 55 Gew.-% aufweist.

18. Versiegelter Behälter, umfassend einen abziehbaren Deckel, der mit einer Behälterversiegelungsfläche versiegelt ist, wobei der Deckel das abziehbare und siegelbare Deckelmaterial nach einem der Ansprüche 1 bis 15 umfasst, wobei
die Behälterversiegelungsfläche ein starrer Ring ist;
eine durchschnittliche Abziehkraft zwischen dem abziehbaren Deckel und der Behälterversiegelungsfläche in einem Bereich zwischen 8 und 15 N gemäß ASTM F2824-10 (45° Abziehwinkel) liegt;
eine Berstfestigkeit des versiegelten Behälters mindestens 2 bar gemäß ASTM F1140/F1140M-13, Testmethode A, beträgt; und die Behälterversiegelungsfläche nach Abziehen des abziehbaren Deckels einen zurückbleibenden ununterbrochenen, scharf definierten Abdruck der Siegelschicht präsentiert.

19. Versiegelter Behälter nach Anspruch 18, wobei eine anfängliche maximale Abziehkraft zwischen dem abziehbaren Deckel und der Behälterversiegelungsfläche zwischen 15 und 40 N gemäß ASTM F2824-10 (45° Abziehwinkel) beträgt.

20. Versiegelter Behälter nach Anspruch 18 oder 19, wobei die Behälterversiegelungsfläche aus der Gruppe bestehend aus blankem Weißblech, zinnfreiem Stahl und Aluminium ausgewählt ist.

## Revendications

1. Matériau d'operculage pelable et scellable comprenant un substrat métallique et une couche de scellement, la couche de scellement comprenant :
de 70 % à 89 % en poids, d'un copolymère (A) comprenant un ou plusieurs monomères d'oléfine polymérisée et un ou plusieurs monomères de (poly)acide carboxylique éthyléniquement insaturé polymérisé ;
de 10 % à 29 % en poids d'un copolymère (B) comprenant un ou plusieurs monomères d'ester de (méth)acrylate polymérisé ; et
de 1 % à 10 % en poids d'une ou de plusieurs particules inorganiques (C) **caractérisées par** un diamètre médian massique (D50) compris entre 1 et 5 microns.

2. Matériau d'operculage pelable et scellable selon la revendication 1 dans lequel les particules inorganiques (C) sont **caractérisées par** une distribution granulométrique comprenant une valeur D₉₈ inférieure à 10 microns et une valeur D₁₀ inférieure à 1 micron.

3. Matériau d'operculage pelable et scellable selon l'une quelconque des revendications précédentes, dans lequel :
le copolymère (A) comprend de 55 % à 90 % en poids d'un ou de plusieurs monomères d'oléfine polymérisée, et de 10 % à 35 % en poids d'un ou de plusieurs monomères de (poly)acide carboxylique éthyléniquement insaturé polymérisé choisis dans le groupe constitué par l'acide (méth)acrylique, l'acide maléique, l'acide fumarique, l'acide crotonique et l'acide itaconique ; et
le copolymère (B) comprend un ou plusieurs monomères d'ester en C1-C8 de (méth)acrylate polymérisé.

4. Matériau d'operculage pelable et scellable selon l'une quelconque des revendications précédentes dans lequel le copolymère (B) comprend jusqu'à 30 % en poids d'un ou de plusieurs monomères de (poly)acide carboxylique éthyléniquement insaturé polymérisé choisis dans le groupe constitué par l'acide (méth)acrylique, l'acide maléique, l'acide fumarique, l'acide crotonique et l'acide itaconique.

5. Matériau d'operculage pelable et scellable selon l'une quelconque des revendications précédentes dans lequel les particules inorganiques (C) sont choisies dans le groupe constitué par l'halloysite, la kaolinite, l'illite, la montmorillonite, la vermiculite, le talc, la sépiolite, la palygorskite, la pyrophyllite et des mélanges de ceux-ci.

6. Matériau d'operculage pelable et scellable selon l'une quelconque des revendications précédentes, dans lequel les particules inorganiques (C) comprennent une distribution granulométrique comprenant une valeur D₉₈ de 8 microns ou moins.

7. Matériau d'operculage pelable et scellable selon l'une quelconque des revendications précédentes dans lequel les particules inorganiques (C) comprennent une distribution granulométrique comprenant une valeur D₉₈ de 6 microns ou moins.

8. Matériau d'operculage pelable et scellable selon l'une quelconque des revendications précédentes dans lequel le substrat métallique est une feuille d'aluminium d'une épaisseur entre 20 et 200 microns.

9. Matériau d'operculage pelable et scellable selon l'une quelconque des revendications précédentes dans lequel le copolymère (A) comprend de 70 % à 85 % en poids d'éthylène polymérisé, et de 15 % à 30 % en poids d'acide (méth)acrylique.

10. Matériau d'operculage pelable et scellable selon l'une quelconque des revendications précédentes dans lequel le copolymère (B) comprend un mélange polymérisé de méthacrylate de méthyle et de (méth)acrylate de butyle.

11. Matériau d'operculage pelable et scellable selon l'une quelconque des revendications précédentes dans lequel le copolymère (B) comprend un mélange polymérisé de méthacrylate de méthyle, de (méth)acrylate de butyle et d'acide méthacrylique.

12. Matériau d'operculage pelable et scellable selon l'une quelconque des revendications précédentes dans lequel la couche de scellement comprend entre 1 % et 5 % en poids de particules inorganiques (C).

13. Matériau d'operculage pelable et scellable selon l'une quelconque des revendications précédentes dans lequel l'épaisseur de la couche de scellement est entre 2 et 13 microns.

14. Matériau d'operculage pelable et scellable selon l'une quelconque des revendications précédentes dans lequel l'épaisseur de la couche de scellement est entre 4 et 10 microns.

15. Matériau d'operculage pelable et scellable selon l'une quelconque des revendications précédentes dans lequel l'épaisseur de la couche de scellement est entre 6 et 9 microns.

16. Procédé de production du matériau d'operculage pelable et scellable selon l'une quelconque des revendications 1 à 15, comprenant les étapes consistant à :
dérouler une bobine du substrat métallique ;
appliquer une laque à base d'eau comprenant le copolymère (A), le copolymère (B) et les particules inorganiques (C) sur le substrat métallique déroulé au moyen d'un système de revêtement ; et
sécher la laque à base d'eau pour former la couche de scellement, avec pour résultat le fait que le matériau d'operculage pelable et scellable comprend le substrat métallique et la couche de scellement ; et
dans lequel l'épaisseur de la couche de scellement est entre 2 et 13 microns.

17. Procédé selon la revendication 16, dans lequel la laque à base d'eau a une teneur en matières solides entre 35 % et 55 % en poids.

18. Récipient scellé comprenant un couvercle à peler scellé sur une surface de scellement de récipient, ledit couvercle comprenant le matériau d'operculage pelable et scellable selon l'une quelconque des revendications 1 à 15, dans lequel
la surface de scellement de récipient est un anneau rigide ; une force de pelage moyenne entre le couvercle à peler et la surface de scellement du récipient est dans une plage entre 8 et 15 N selon la norme ASTM F2824-10 (angle de pelage à 45°) ; une résistance à l'éclatement du récipient scellé est d'au moins 2 bar selon la norme ASTM F1140/F1140M-13, méthode d'essai A ; et
la surface de scellement de récipient présente une empreinte ininterrompue et nettement définie de la couche de scellement demeurant après le pelage du couvercle à peler.

19. Récipient scellé selon la revendication 18 dans lequel une force de pelage maximale initiale entre le couvercle à peler et la surface de scellement de récipient est entre 15 et 40 N selon la norme ASTM F2824-10 (angle de pelage à 45°).

20. Récipient scellé selon la revendication 18 ou 19 dans lequel la surface de scellement de récipient est choisie dans le groupe constitué par le fer blanc nu, l'acier chromé et l'aluminium.
